(19) **Europäisches Patentamt**

**European Patent Office**

**Office européen des brevets**

(11) Veröffentlichungsnummer : **0 281 584 B1**

(12) **EUROPÄISCHE PATENTSCHRIFT**

(45) Veröffentlichungstag der Patentschrift :
**29.05.91 Patentblatt 91/22**

(51) Int. Cl.⁵ : **G01C 9/20**

(21) Anmeldenummer : **87905582.0**

(22) Anmeldetag : **08.09.87**

(86) Internationale Anmeldenummer :
**PCT/CH87/00113**

(87) Internationale Veröffentlichungsnummer :
**WO 88/02100 24.03.88 Gazette 88/07**

(54) OPTOELEKTRONISCHER THEODOLITSENSOR.

(30) Priorität : **15.09.86 CH 3686/86**

(43) Veröffentlichungstag der Anmeldung :
**14.09.88 Patentblatt 88/37**

(45) Bekanntmachung des Hinweises auf die
Patenterteilung :
**29.05.91 Patentblatt 91/22**

(84) Benannte Vertragsstaaten :
**AT BE CH DE FR GB IT LI LU NL SE**

(56) Entgegenhaltungen :
**GB-A- 2 152 659**
**Patent Abstracts of Japan, volume 5, No 177
(P-89)(849),13 Novembre 1981 & JP, A,
56107113**

(73) Patentinhaber : **NOTRON Engineering AG
Bomatt, Postfach
CH-3436 Zollbrück (CH)**

(72) Erfinder : **WINIGER, Hans-Rudolf
Bomatt
CH-3436 Zollbrück (CH)**

## Beschreibung

Die Erfindung betrifft einen optoelektronischen Theodolitsensor zum Messen von Vertikal- und/oder Höhenwinkeln gemäss dem Oberbegriff des Patentanspruches 1.

In Abweichung von der in der Praxis üblichen Art, zur Messung von Winkeln für Navigation und Geodäsie oder zum Prüfen der Lage senkrechter und waagrechter Teile oder zur Messung der Neigungen des Erdbodens, von Lotschwankungen und Gezeiten des Erdkörpers oder für die Messung der Seismizität, Theodolite mit elektro-optischer Kreisablesung, Röhrenoder Dosenlibellen oder Sextanten einzusetzen, sieht die Konstruktion der Erfindung einen optoelektronischen Theodolitsensor vor, der nach entsprechender Auslegung für all diese Messaufgaben eingesetzt werden kann.

Die zur Messung des sichtbaren oder künstlichen Horizontes eingesetzten Libellen, Pendel, kreiselgestützen Marken, Quecksilberhorizonte oder Spiegelglasscheiben können nur mit Hilfe von Teilkreisen oder Gradbogen zur Messung der Horizontal- oder Vertikalabweichung herangezogen werden. Zudem sind diese Instrumente oder Sensoren entweder sehr aufwendig in der Herstellung oder ungenau und ermöglichen meist nur einen begrenzten Anwendungsbereich.

Hier will die Erfindung Abhilfe schaffen. Die Erfindung, wie sie in den Ansprüchen gekennzeichnet ist, löst die Aufgabe, einen optoelektronischen Theodolitsensor vorzuschlagen, bei dem alle Winkel zwischen der Horizontalen und der Vertikalen sehr exakt und unter Ausschluss mechanischer oder optischer Ablesung ermittelt werden können.

Die durch die Erfindung erreichten Vorteile sind im wesentlichen darin zu sehen, dass sehr schnell und exakt alle Winkel zwischen der Horizontalen und der Vertikalen absolut gemessen werden können. Zudem besticht die Erfindung durch ihren einfachen Aufbau und durch die Ausnützung sehr exakter physikalischer Grössen. Ausserdem ist das zugrunde gelegte Messprizip berührungslos und unempfindlich gegenüber äusseren Einflüssen.

Durch Abstimmung und entsprechender Auslegung kann die Erfindung in praktisch allen Bereichen der Technik, in welchen exakte Winkel oder die Horizontale resp. die Vertikale sowie Winkelabweichungen derselben interessieren, Verwendung finden.

Im folgenden wird die Erfindung anhand von lediglich einen Ausführungsweg darstellenden Zeichnungen näher erläutert.

Es zeigt

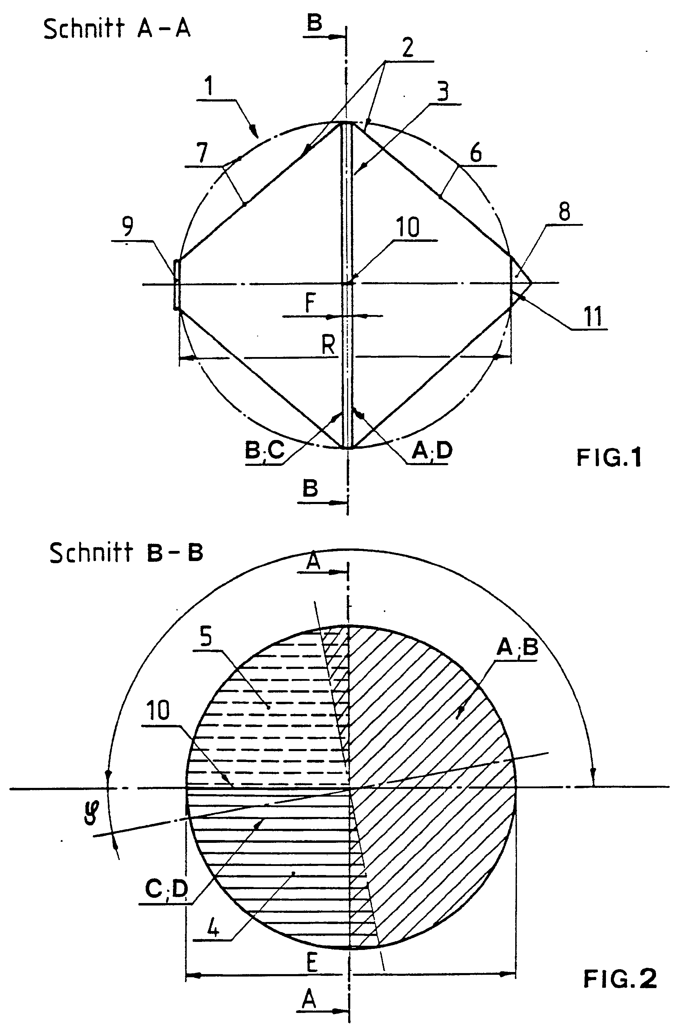

Figur 1 im Schnitt A-A einen optoelektronischen Theodolitsensor,

Figur 2 das Schnittbild B-B der Figur 1.

In den Figuren ist ein optoelektronischer Theodolitsensor dargestellt, welcher in seinem grundsätzlichen Aufbau aus einem Gehäuse (2), einer Messzelle (3), die je zur Hälfte zwei nichtmischbare, überschichtet vorliegende Flüssigkeiten (4, 5) enthält, wobei die eine lichtundurchlässig (4) und die andere lichtdurchlässig (5) ist, den kalotten- oder kegelförmigen Abdeckungen (6, 7), einer Lichtquelle (8) und einem direkt gegenüberliegenden optoelektronischen Bauelement (9) besteht.

Erfindungsgemäss sind die Seitenflächen A und B der Messzelle lichtundurchlässig, die Seitenflächen C und D jedoch lichtdurchlässig. Der optoelektronische Theodolitsensor (1) steht in seiner Normallage so, dass sich die Grenzfläche (10) der zwei nichtmischbaren Flüssigkeiten (4, 5) exakt in der Mitte der zylinderförmigen Messzelle befindet, was durch exaktes 1 : 1 Auffüllen der zwei Flüssigkeiten (4, 5) erreicht wird.

Wird nun die Normallage um einen positiven oder einen negativen Winkel $\varphi$ gedreht, so verkleinert resp. vergrössert sich die scheinbare Fläche des in der Normallage exakten 1/4 Kreissektors der Seitenflächen C und D, da die lichtundurchlässige Flüssigkeit (4) nun einen grösseren resp. kleineren Kreissektor abdeckt. Diese Veränderung der scheinbaren Fläche reduziert resp. vergrössert den Lichtstrom auf das optoelektronische Bauelement (9), dessen Signaländerung nun in Funktion des Winkels $\varphi$ umgeformt und als Messgrösse herangezogen wird.

Eine besonders zweckmässige Gestaltung des optoelektronischen Theodolitsensors mit den kennzeichnenden Merkmalen des Hauptanspruchs sieht vor, dass die zwei nichtmischbaren Flüssigkeiten eine möglichst unterschiedliche Dichte aufweisen. Ausserdem sind vorzugweise Flüssigkeiten mit möglichst tiefem Dampfdruck resp. Schmelzpunkt einzufüllen. Hier eignen sich viele organische und auch anorganische Verbindungen, wie z.B. die folgenden Binärsysteme :

– Höhere ein- und mehrwertige Alkohole/aromatische Verbindungen oder halogenierte Kohlenwasserstoffe ;
– organische Säureanhydride/aliphatische Kohlenwasserstoffe ;
– Quecksilber, Wasser mit Tensid- oder Alkoholzusatz, Schwefelkohlenstoff/aliphatische oder aromatische Verbindungen und viele andere mehr.

Sofern als lichtundurchlässige Flüssigkeit nicht Quecksilber eingefüllt wird, ist die eine Flüssigkeit (4) lichtundurchlässig einzufärben. Dies kann durch Farbstoff, je nach Art der beiden Flüssigkeiten auch durch Indikatorzusatz, Russ oder andere Pigmente geschehen. Vor allem ist darauf zu achten, dass die Einfärbung selektiv und äusserst stabil über Jahre unverändert bestehen bleibt. Um eine Sedimentation des Pigmentes zu verhindern, ist dessen partikelgrösse derart fein zu wählen, dass die BROWNsche Molekularbewegung wirken kann.

Die Messzelle (3) ist mit Vorzug zylinderförmig auszubilden, um eine sehr einfache Funktion des Lichtstroms (durchscheinende Fläche) zum Winkel φ zu erzielen ; nämlich Proportionalität.

Das Verhältnis Kreisdurchmesser E zur Höhe F kann dabei 10'000 : 1 bis 10 : 1, vorzugsweise 2'000 : 1 bis 50 : 1 betragen. Die Abdeckungen (6, 7) können kalotten- und/oder kegelförmig ausgebildet sein und sind innen derart zu beschichten oder mit Metall zu bedampfen, dass sie einen hohen Reflexionsgrad aufweisen und somit eine gleichmässige Lichtverteilung gewährleisten. Vorzugsweise sind die Innenflächen mit reiner, weisser Farbe mit hohem Reflexionsgrad zu beschichten.

Als Lichtquelle (8) eignen sich Glühlampen oder Leuchtdioden, die auf das optoelektronische Bauelement (9) hinsichtlich Wellenlänge und Strahlungsleistung abgestimmt sind. Vor allem ist bei den Glühlampen darauf zu achten, dass sie durch Konstruktion und künstliche Alterung auf stabile und damit kalibrierbare fotometrische Daten ausgelegt sind. Um eine regelmässige Lichtverteilung zu erzielen, ist es angebracht vor die Lichtquelle (8) eine ebene diffus strahlende Fläche (11) anzubringen. Als optoelektronisches Bauelement (9) eignet sich grundsätzlich jeder optoelektronische Empfänger, sei dies nun ein Fotowiderstand, Fotodiode, Fotoelement, Fototransistor, Fotothyristor oder ein Fotomultiplier. Vor allem ist darauf zu achten, dass das optoelektronische Bauelement (9) eine hohe Linearität zwischen Messgrösse (Spannung, Widerstand, Strom) und Beleuchtungsstärke über mehrere Dekaden beibehält. Aufgrund ihrer Proportinalität zwischen Fotostrom resp. Kurzschlussstrom und Beleuchtungsstärke eigenen sich Fotodioden resp. Fotoelemente vorzüglich, da eine aufwendige Linearisierung entfällt. Der Abstand R zwischen Lichtquelle (8) und optoelektronischem Bauelement (9) ist derart zu wählen und abzustimmen, dass unter Berücksichtigung der Ausdehnung von Sender (8) und Empfänger (9) ein minimaler Fehler entsteht.

## Ansprüche

1. Optoelektronischer Theodolitsensor (1), bestehend aus einem Gehäuse (2), einer mit mindestens einer Flüssigkeit gefüllten, flachen, zylindrischen Messzelle (3), deren Seitenflächen (BC, AD) jeweils zur Hälfte lichtundurchlässig (A, B) und zur Hälfte lichtdurchlässig (C, D) ausgebildet sind und die so angeordnet sind, dass die Messzelle (3) in Projektion einen lichtdurchlässigen Halbkreis darstellt, und mit einer Lichtquelle (8) sowie einem optoelektronischen Empfänger (9), **dadurch gekennzeichnet,** dass die Messzelle (3) je zur Hälfte zweinichtmischbare Flüssigkeiten (4, 5) überschichtet aufweist, wovon die untere lichtundurchlässig (4) und die überschichtete lichtdurchlässig (5) ist, und dass beidseitig an die Seitenflächen (BC, AD) je eine Abdeckung (6, 7) angebracht ist, die die erwähnte Lichtquelle (8) resp. den optoelektronischen Empfänger (9) gegenüberliegend aufweist, so dass eine Winkeländerung der Messzelle (3) ein optoelektronisches Signal ergibt, welches nach entsprechender Umformung zum Messen des Winkels dient

2. Optoelektronischer Theodolitsensor nach Anspruch 1, **dadurch gekennzeichnet,** dass die Flüssigkeitskombination (4, 5) in der Messzelle (3) aus organischen Säureanhydrid/aliphatischen Kohlenwasserstoff besteht.

3. Optoelektronischer Theodolitsensor nach Anspruch 1, **dadurch gekennzeichnet,** dass die zylinderförmige Messzelle (3) ein Verhältnis Kreisdurchmesser (E) zu Höhe (F) 10'000 : 1 bis 10 : 1, vorzugsweise 2'000 : 1 bis 50 : 1 aufweist.

4. Optoelektronischer Theodolitsensor nach Anspruch 1, **dadurch gekennzeichnet,** dass die Abdeckungen (6, 7) kalotten- und/oder kegelförmig ausgebildet sind und innen einen hohen Reflexionsgrad aufweisen.

## Claims

1. Optoelectronic theodolite sensor (1), consisting of a housing (2), a flat, cylindrical measuring cell (3) which is filled with at least one liquid and whose lateral surfaces (BC, AD) are each half opaque to light (A, B) and half transparent to light (C, D) and are arranged so that the measuring cell (3) represents, in projection, a semicircle opaque to light, and having a light source (8) and an optoelectronic receiver (9), characterized in that the measuring cell (3) contains two immiscible liquids (4, 5) in layers, each of which occupies half the cell, of which the lower liquide is opaque to light (4) and the upper liquid layer is transparent to light (5), and that a cover (6, 7) is mounted on both sides of the lateral surfaces (BC, AD), said cover having the stated light source (8) or the optoelectronic receiver (9) opposite, so that a change in the angle of the measuring cell (3) results in an optoelectronic signal which, after appropriate conversion, is used for measuring the angle.

2. Optoelectronic theodolite sensor according to Claim 1, characterized in that the liquid combination (4, 5) in the measuring cell (3) consists of an organic anhydride/aliphatic hydrocarbon.

3. Optoelectronic theodolite sensor according to Claim 1, characterized in that the cylindrical measuring cell (3) has a ratio of circle diameter (E) to height (F) of 10000 : 1 to 10 : 1, preferably 2000 : 1 to 50 : 1.

4. Optoelectronic theodolite sensor according to Claim 1, characterized in that the covers (6, 7) are cap-shaped and/or conical and have a high reflectivity on the inside.

## Revendications

1. Détecteur optoélectronique pour théodolite (1), composé d'un boîtier (2), d'un capteur cylindrique plat rempli au moins d'un liquide (3), dont les surfaces latérales (BC, AD) sont chacune pour moitié transparentes (A, B) et pour moitié opaques (C, D) et disposées de manière que le capteur (3) représente en projection un demi-cercle transparent, et d'une source lumineuse (8) ainsi que d'un récepteur optoélectronique (9), caractérisé par le fait que chaque moitié du capteur (3) est recouverte d'un liquide, les deux liquides n'étant pas miscibles (4, 5), le liquide inférieur étant opaque (4) et le liquide supérieur transparent (5) et que, sur chacune des deux surfaces latérales (BC, AD), un cache (6, 7) est disposé face à la source lumineuse mentionnée (8) et au récepteur optoélectronique (9) de manière qu'un changement angulaire du capteur (3) provoque un signal optoélectronique qui, après un traitement adéquat, sert à mesurer l'angle.

2. Détecteur optoélectronique pour théodolite selon la revendication 1, caractérisé par la fait que les deux liquides (4, 5) du capteur (3) sont respectivement un anhydride d'acide organique et un hydrocarbure aliphatique.

3. Détecteur optoélectronique pour théodolite selon la revendication 1, caractérisé par le fait que le capteur cylindrique (3) présente un rapport diamètre (E) sur hauteur (F) de 10.000 : 1 à 10 : 1, de préférence de 2000 : 1 à 50 : 1.

4. Détecteur optoélectronique pour théodolite selon la revendication 1, caractérisé par le fait que les caches (6, 7) ont une forme de calotte ou de cône et présentent un indice de réflexion élevé sur leur face intérieure.

Schnitt A–A

**FIG.1**

Schnitt B–B

**FIG.2**